# FASCICULE DE BREVET EUROPEEN

(11) **EP 3 008 019 B1**
(45) Date de publication et mention de la délivrance du brevet: **15.04.2020**
(21) Numéro de dépôt: 14741783.6
(22) Date de dépôt: 12.06.2014
(51) Int. Cl.: C02F 11/08, G21F 9/08, G21F 9/16, G21F 9/30, C02F 1/04, C02F 1/66

(54) **PROCEDE ET INSTALLATION DE TRAITEMENT PAR OXYDATION PAR VOIE HUMIDE DE DECHETS ORGANIQUES DANGEREUX, NOTAMMENT RADIOACTIFS, CONTENANT DES CHARGES MINERALES**
VERFAHREN UND ANLAGE ZUR NASSOXIDATIONSBEHANDLUNG VON GEFÄHRLICHEN ORGANISCHEN ABFÄLLEN, INSBESONDERE ATOMMÜLL, MIT MINERALISCHEN FÜLLSTOFFEN
METHOD AND PLANT FOR THE WET-ROUTE OXIDATION TREATMENT OF HAZARDOUS ORGANIC WASTE, NOTABLY RADIOACTVE WASTE, CONTAINING MINERAL FILLERS

(30) Priorité: 13.06.2013 CH 11172013
(43) Date de publication de la demande: 20.04.2016
(73) Titulaire: Granit Technologies and Engineering (GRT) SA, 1350 Orbe (CH)
(72) Inventeur: MERCIER, Olivier, 1882 Gryon (CH); CORREA, Boris, 1010 Lausanne (CH)
(74) Mandataire: Nithardt, Roland
(86) Numéro de dépôt international: PCT/CH2014/000081
(87) Numéro de publication internationale: WO 2014/198006

(56) Documents cités:
- US-A- 6 090 291

## Description

### Domaine technique

La présente invention concerne une installation de traitement par oxydation par voie humide de déchets organiques dangereux sous forme solide et liquide principalement, notamment radioactifs, contenant des charges minérales et des charges organiques, et optionnellement des matières bio-minérales.

L'invention concerne également un procédé de traitement par oxydation par voie humide de déchets organiques dangereux sous forme solide et liquide principalement, notamment radioactifs, contenant des charges minérales et des charges organiques, et optionnellement des matières bio-minérales.

### Technique antérieure

Le principe de ce procédé a trouvé une application industrielle pour le traitement en continu de déchets liquides contenant des charges de matières minérales, ce traitement s'effectuant par une oxydation par voie humide. Il est décrit dans la publication internationale WO 2010/108290 A1.

Les déchets solides organiques contenant des substances des matières minérales et qui présentent un caractère dangereux pour la santé, notamment lorsque ces déchets sont radioactifs, doivent être manipulés avec des précautions particulières pour éviter leur dispersion depuis leur phase d'amenée sur un site de traitement, au cours de toutes les étapes de ce traitement et jusqu'à leur évacuation après leur traitement. On a constaté que ces précautions ne peuvent pas être prises lorsque le traitement s'effectue en continu, c'est-à-dire lorsque les matières à traiter sont amenées dans un site relativement ouvert qui n'offre pas les garanties de sécurité environnementales exigées. En effet, lorsque le site est ouvert pour permettre un acheminement continu des matières à traiter, le risque de fuites de résidus dangereux sous forme de particules fines, sous forme gazeuse ou même sous forme liquide ne peut pas être totalement éliminé.

Le brevet américain N° 6,090,291 décrit un procédé de traitement pour décomposer des matières organiques ou inorganiques dans une installation qui les maintient dans un état dit « supercritique », c'est-à-dire dans lequel l'eau du traitement se trouve à l'état de vapeur. Une telle technologie présente une différence fondamentale par rapport au procédé de l'invention en raison du coût élevé de l'installation, de la gestion des risques beaucoup plus compliquée et du coût du traitement, notamment du fait que les températures de traitement sont plus élevées et impliquent des frais de chauffage plus importants. L'état supercritique et l'état sous-critiques sont fondamentalement différents et il n'est pas évident, même pour un homme du métier d'effectuer le traitement des substances dangereuses selon un procédé de traitement par oxydation, en maintenant ces substances dans un milieu aqueux dans un état sous-critique. Il est en outre impossible de déduire d'une technologie utilisant un procédé de traitement de substances organiques ou non, dans un état supercritique, l'enseignement nécessaire pour effectuer le traitement de substances dangereuses par oxydation, en les maintenant dans un état sous-critique.

### Exposé de l'invention

La présente invention apporte une solution au problème évoqué ci-dessus en proposant à la fois une installation et un procédé pour traiter ces déchets par oxydation par voie humide et en utilisant des techniques sécurisées pour acheminer les déchets à traiter, pour les confiner pendant tout leur traitement et pour les évacuer à la fin du traitement en éliminant tous risques d'émanations gazeuses ou liquides provenant de ces déchets et en conséquence tous risques de contamination accidentelle résultant de telles émanations.

Dans ce but, l'installation selon l'invention, telle que définie dans la revendication 1, est caractérisé en ce qu'elle comporte :
- une enceinte fermée et étanche pourvue d'une entrée des déchets à traiter et d'une sortie des déchets traités, ladite entrée étant réalisée sous la forme d'un sas contrôlé ;
- des moyens pour acheminer sous forme confinée dans des fûts hermétiquement scellés un volume desdits déchets organiques dangereux, lesdits moyens comportant un transporteur à bande traversant ladite entrée, afin d'acheminer lesdits déchets sur le transporteur à bande;
- un palan pour acheminer lesdits fûts au dessus d'une cuve de mélange,
- des moyens pour scier automatiquement en deux les fûts pour permettre de déverser leur contenu dans ladite cuve de mélange ;
- ladite cuve de mélange pour ajouter audit volume prédéterminé une quantité donnée d'eau mélangée à une base en vue d'ajuster le pH à une valeur déterminée, afin de constituer une solution et/ou une suspension liquide,
- un réacteur à pression et des moyens pour transvaser dans ledit réacteur à pression ladite solution et/ou ladite suspension liquide,
- un dispositif pour introduire dans ledit réacteur à pression une atmosphère d'oxygène et pour mettre ladite atmosphère sous une pression comprise entre 40 et 200 bars et suffisante pour maintenir l'eau sous forme liquide dans ledit réacteur à pression,
- un dispositif agitateur pour agiter ladite solution et/ou ladite suspension liquide confinée dans ledit réacteur à pression,
- un équipement de chauffage pour soumettre ledit réacteur à pression (20) avec son contenu à un traitement thermique à une température sensiblement comprise entre 150 et 350°C et de préférence voisine de 300°C pendant une durée déterminée pour finaliser ladite oxydation par voie humide, afin d'effectuer ledit traitement dans des conditions dites « sous-critiques », l'eau étant maintenue à l'état liquide, et
- des moyens pour évacuer lesdits déchets traités de manière sécurisée en vue de leur stockage ou de leur élimination.

De façon avantageuse, l'installation selon l'invention, est avantageuse en ce que la cuve de mélange est équipée d'une trémie sous laquelle est monté un broyeur pour concasser les déchets entrants, ladite cuve de mélange étant agencée pour recevoir ladite quantité donnée d'eau pour former un mélange liquide sous forme de suspension fluide contenant lesdits déchets à traiter et concassés.

Ledit équipement de chauffage dudit réacteur à pression comporte avantageusement un réservoir à huile couplé à un manteau de chauffage entourant en partie le réacteur à pression.

L'installation comporte de façon avantageuse un évaporateur connecté audit réacteur à pression pour séparer les résidus solides et les résidus gazeux issus desdits déchets après leur traitement dans ledit réacteur à pression.

Elle comporte en outre un cristalliseur agencé pour traiter les résidus gazeux issus desdits déchets après leur traitement dans ledit réacteur à pression.

L'installation peut comporter en outre un mélangeur de particules minérales pour combiner lesdites particules minérales audits résidus solides issus desdits déchets après leur traitement dans ledit réacteur à pression pour figer les minéraux radioactifs.

Dans ce but également, le procédé selon l'invention, tel que défini dans la revendication 7, est caractérisé en ce que :
- l'on achemine sous forme confinée dans des fûts (A) hermétiquement scellés un volume desdits déchets organiques dangereux qui traversent le sas contrôlé (12a) de l'enceinte (11) sur le transporteur à bande (14) ;
- l'on achemine lesdits fûts (A) au-dessus de la cuve de mélange (15) par un palan (16),
- l'on scie automatiquement en deux les fûts (A) pour permettre de déverser leur contenu dans ladite cuve de mélange (15) ;
- l'on ajoute dans la cuve de mélange (15) audit volume prédéterminé une quantité donnée d'eau mélangée à une base en vue d'ajuster le pH à une valeur déterminée, pour constituer une solution et/ou une suspension liquide que l'on transvase dans un réacteur à pression (20) ;
- l'on pressurise le contenu dudit réacteur avec une atmosphère d'oxygène sous pression comprise entre 40 et 200 bars et suffisante pour maintenir l'eau sous forme liquide dans ledit réacteur à pression (20), tout en agitant ladite solution et/ou ladite suspension liquide confinée dans ledit réacteur (20), et l'on soumet ledit réacteur (20) avec son contenu à un traitement thermique à une température sensiblement comprise entre 150 et 350°C et de préférence voisine de 300°C, pendant une durée déterminée pour finaliser ladite oxydation par voie humide, afin d'effectuer ledit traitement dans des conditions dites "sous-critiques", l'eau étant maintenue à l'état liquide;
- l'on procède ensuite à un refroidissement du contenu dudit réacteur;
- l'on évacue lesdits déchets traités de manière sécurisée en vue de leur concentration ou de leur élimination.

De façon avantageuse, ladite quantité donnée d'eau mélangée à une base est ajustée de telle manière que la solution et/ou la suspension liquide contienne sensiblement entre 5 et 30% et de préférence entre 8 et 15% de matière sèche en solution et/ou en suspension.

D'autres modes préférentiels du procédé selon l'invention sont définis dans les revendications 9 à 17.

### Description sommaire des dessins

La présente invention et ses avantages apparaîtront mieux dans la description suivante d'un mode de réalisation donné à titre d'exemple non limitatif, en référence au dessin annexé dans lesquels :

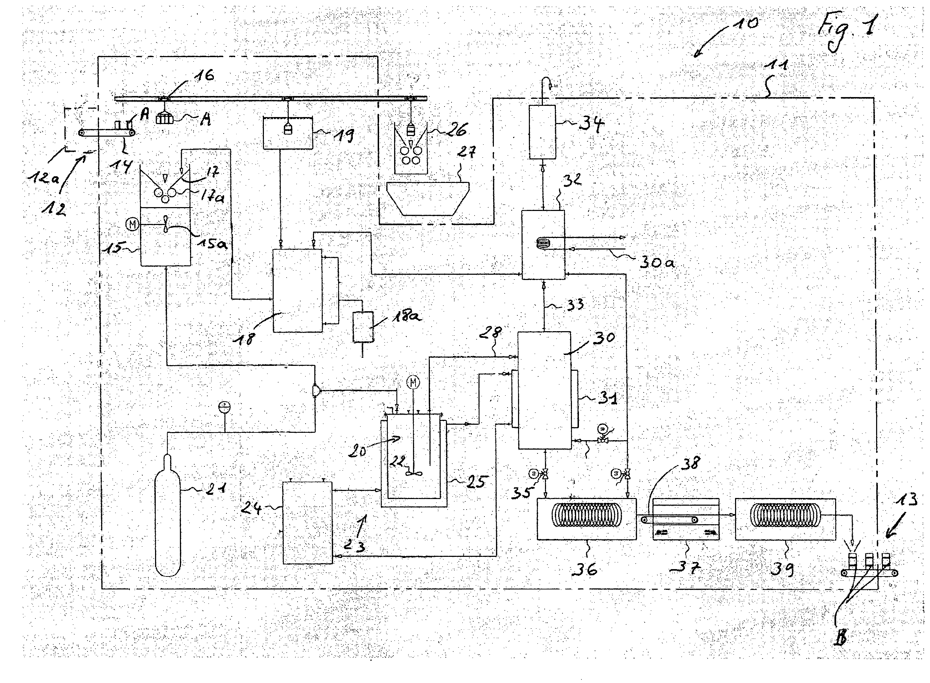

la figure 1 représente une vue schématique générale de l'installation selon l'invention,

### Meilleure manière de réaliser l'invention

En référence à la figure 1, l'installation 10 pour le traitement par oxydation par voie humide de déchets organiques dangereux, notamment radioactifs, pouvant contenir des charges minérales, comporte une enceinte fermée 11 pourvue principalement d'une entrée 12 des déchets à traiter et une sortie 13 des déchets traités. L'enceinte fermée 11 est conçue pour être étanche et empêcher toute fuite accidentelle de substances dangereuses vers l'extérieur, que ces substances soient à l'état solide, liquide ou gazeux. En raison précisément de la dangerosité des déchets à traiter, il est essentiel que l'enceinte de traitement puisse offrir toutes les garanties de sécurité pour éviter tout risque de contamination. C'est également en raison de cette dangerosité, que les déchets sont acheminés sous forme confinée dans des conteneurs A, par exemple des fûts A en acier normal, hermétiquement fermés et traversent ladite entrée 12 qui est par exemple réalisée sous la forme d'un sas contrôlé 12a, sur un transporteur à bande 14. Les déchets se présentent sous forme solide et liquide principalement.

Le procédé de traitement implique la préparation d'une solution et/ou d'une suspension liquide en mélangeant les déchets contenus dans un ou plusieurs conteneurs A avec une quantité donnée d'eau à laquelle on ajoute une base en vue d'ajuster le pH à une valeur déterminée, pour constituer ladite solution et/ou une suspension liquide. A cet effet, le dispositif 10 comporte une cuve de mélange 15 qui reçoit d'une part un volume prédéterminé de déchets à traiter provenant des conteneurs A qui sont de préférence des fûts scellés. Ces fûts sont acheminés au-dessus de la cuve de mélange 15 par un palan 16, de préférence sciés automatiquement en deux pour permettre de déverser leur contenu dans une trémie 17 sous laquelle est monté un broyeur 17a pour concasser les déchets avant de leur libérer à l'intérieur de la cuve de mélange 15. Les déchets concassés se présentent sous la forme de poudres ou de particules de petite taille. D'autre part, on introduit dans la cuve de mélange 15, une quantité donnée d'eau à laquelle on a ajouté une base et provenant d'un réservoir 18 alimenté notamment par un bassin de lavage 19 des fûts sciés et vidés comme mentionné ci-dessus. Le bassin de lavage 19 permet d'approvisionner en partie le réservoir d'eau 18 avec l'eau de rinçage des fûts. Toutefois, si le volume de l'eau de rinçage des fûts se révèle trop important, cette eau est traitée par des résines contenues dans un échangeur d'ions 18a de telle manière que l'éventuel trop plein puisse être rejeté à l'extérieur de l'installation 10. Les résines peuvent être recyclées à l'intérieur de l'installation et renvoyées au début du procédé, au niveau du concassage des déchets à traiter.

Le contenu de la cuve de mélange 15 qui se trouve sous la forme d'un mélange et/ou d'une suspension contenant sensiblement entre 8 et 15% de matière sèche et de préférence environ 10% de matière sèche, est constamment mélangé par un mélangeur 15a pour que son homogénéité soit assurée. Le niveau minimal et le niveau maximal du mélange dans la cuve de mélange sont contrôlés et ajustés, si nécessaire, par apport d'eau en provenance du réservoir 18. Le pH du mélange est contrôlé régulièrement et si son acidité dépasse une valeur seuil, une base minérale peut être ajoutée en conséquence.
La solution est ensuite transvasée, de préférence par pompage, à pression ambiante ou à basse pression dans un réacteur 20 qui est une cuve à pression. Dans ce réacteur, l'air peut être évacué et remplacé par un gaz oxydant, par exemple de l'oxygène dont on augmente progressivement la pression, cet oxygène provenant d'un réservoir d'oxygène 21. La pression de l'atmosphère d'oxygène est amenée sensiblement à une valeur comprise entre 40 et 200 bars et de préférence entre 70 et 100 bars. Le taux de remplissage du réacteur 20 est sensiblement compris entre 20 et 90% et de préférence entre 40 et 80% de son volume intérieur. Le réacteur 20 comporte un agitateur entraîné 22 qui maintient le mélange en agitation afin que le traitement puisse se faire de façon régulière sur un mélange homogène. On notera que l'oxygène pourrait être remplacé par n'importe quel gaz oxydant, par exemple de l'air, qui est moins efficace et nécessiterait un temps de traitement plus long, mais qui a l'avantage d'être plus économique que l'oxygène pur.
Le réacteur 20 est pourvu d'un équipement de chauffage 23 pour soumettre le contenu à un traitement thermique à une température sensiblement comprise entre 150 et 350°C pendant une durée déterminée pour finaliser ladite oxydation par voie humide grâce à la présence d'une atmosphère d'oxygène sous pression. L'oxydation s'effectue typiquement à des températures de l'ordre de 200 à 310°C, mais ces valeurs ne sont pas figées et peuvent varier selon la nature des déchets à traiter et selon que l'on ait recours à l'utilisation ou non de catalyseurs. L'équipement de chauffage 23 comprend un réservoir à huile 24 qui est en communication avec un manteau de chauffage 25 entourant en partie le réacteur 20 et dans lequel circule de l'huile chauffée à environ 400°C. Des moyens de régulation adéquats permettent de maintenir la température des déchets à traiter dans le réacteur 20 à la température définie. La durée du traitement peut être comprise entre 0.2 et 4 heures, l'objectif étant l'aboutissement complet de l'oxydation des substances dangereuses.

Les parties de fûts vidés et rincés au-dessus du bassin de lavage 19 sont acheminés par le palan 16 vers une presse à fûts 26 d'où ils sont stockés dans une benne 27 qui permettra de les évacuer par la suite. On notera que la presse à fûts 26 et la benne 27 sont disposés à l'extérieur de l'enceinte 11. En effet, les fûts sont préalablement nettoyés et rincés dans une station de lavage et l'eau de rinçage est recueillie dans le réservoir 18 et reste à l'intérieur de l'enceinte 11.

Après l'étape de traitement par oxydation au cours de laquelle le mélange est maintenu à température élevée, ce mélange est rapidement refroidi en envoyant de l'eau de refroidissement dans le manteau 25 entourant partiellement le réacteur 20. Une sorte de trempe se produit au cours d'une première phase de refroidissement de l'ordre de 50 à 150 °C et de préférence de l'ordre de 100°C. Au cours d'une seconde phase de refroidissement la température du mélange est progressivement abaissée jusqu'à la température ambiante. La réaction d'oxydation ayant eu lieu, la plus grande partie du carbone provenant des matières organiques se trouve sous la forme de gaz carbonique et beaucoup d'éléments chimiques sont oxydés. La chaleur évacuée par l'eau de refroidissement peut être utilisée pour la production d'eau chaude à l'extérieur de l'installation.
Un conduit 28 relie directement le réacteur 20 à un évaporateur 30 qui est équipé d'un manteau chauffant 31 connecté en série avec le réservoir à huile 24 à travers le manteau de chauffage 25 entourant en partie le réacteur 20. Cet appareil est utilisé pour la dépressurisation de l'installation au cours de laquelle le mélange liquide et gaz est expulsé vers l'évaporateur qui se trouve à pression ambiante. Une mise en vibration par exemple par ultrasons suivie d'un rinçage à l'oxygène peut être effectuée pour garantir l'évacuation complète du réacteur. L'évaporateur est chauffé par l'huile de l'équipement de chauffage 23. La plus grande partie de l'eau est évaporée et les résidus non organiques ou quasiment non organiques mais contenant de la radioactivité sont concentrés dans le liquide résiduel en solution ou en suspension. Environ 80 à 90% de l'eau est évaporée. Les gaz produits (CO₂, O₂ résiduels et autres, mélangés à la vapeur d'eau sont évacués de l'évaporateur pour être envoyés dans un cristalliseur 32 directement connecté à l'évaporateur 30 par un conduit 33 reliant le haut de l'évaporateur 30 avec le fond du cristalliseur 32. Les gaz non condensables sont rejetés dans l'atmosphère à travers un catalyseur 34 qui surmonte le cristalliseur 30, après un contrôle de conformité aux normes environnementales. Le cristalliseur est équipé de moyens de refroidissement 30a pour maintenir et réguler la température du cristalliseur à une valeur optimale. Le circuit cristalliseur 32 et catalyseur 34 permet d'effectuer le traitement des résidus gazeux provenant du réacteur. Les résidus solides de condensation sont réintroduits dans l'évaporateur ou injectés directement à travers un conduit équipé d'une vanne 35 vers un mélangeur 36 ayant pour fonction de mélanger ces résidus contenant les matières sèches avec du gypse ou du verre par exemple, ou avec toute matière minérale neutre appropriée. L'objectif est de réaliser du gravier de gypse ou de verre avec des tailles de l'ordre du millimètre ou de quelques dizaines de millimètres.
Ce mélange est acheminé vers un sécheur 37 au moyen d'un ruban transporteur ou similaire 38, puis vers une unité de bétonnage 39, en vue de réaliser un mélange durcissable destiné à être coulé dans des tonneaux B ou autres conteneurs en vue d'un stockage du type stockage sécurisé de longue durée. Après coulage et durcissement ils sont évacués par la sortie 13 de l'enceinte 11.
Selon une alternative envisageable, les résidus de l'évaporation et de la cristallisation sont envoyés dans un filtre presse pour éliminer l'eau, en grande partie. Le cake de pressage est directement injecté dans une bétonnière. Ce résidus solide, en général de siccité 10-60% est ensuite mélangé à du ciment dans la bétonnière. L'eau issue du pressage est renvoyée dans le réservoir 19. Le cake de résidus solide peut encore être aggloméré par un procédé adéquat pour produire des composants de taille plus grande, typiquement de celle du gravier avant d'être mélangé à du ciment, ceci afin de réduire le volume final de béton.
Selon une autre variante envisageable, le gravier de gypse contenant les résidus finaux peut être incorporé dans du verre liquide qui, après solidification peut être encapsulé et stocké dans des conteneurs de stockage final de longue durée.

On notera que l'ensemble des opérations de traitement et de manutention s'effectue de manière entièrement automatique à l'intérieur de l'enceinte sécurisée 11.

## Revendications

1. Installation de traitement (10) par oxydation par voie humide de déchets organiques dangereux sous forme solide et liquide principalement, notamment radioactifs, contenant des charges minérales et des charges organiques, et optionnellement des matières bio-minérales, **caractérisée en ce qu'**elle comporte :
- une enceinte fermée et étanche (11) pourvue d'une entrée (12) des déchets à traiter et d'une sortie (13) des déchets traités, ladite entrée étant réalisée sous la forme d'un sas contrôlé (12a);
- des moyens pour acheminer sous forme confinée dans des fûts (A) hermétiquement scellés un volume desdits déchets organiques dangereux, lesdits moyens comportant un transporteur à bande (14) traversant ladite entrée (12), afin d'acheminer lesdits déchets sur le transporteur à bande (14) ;
- un palan pour acheminer lesdits fûts (A) au-dessus d'une cuve de mélange (15),
- des moyens pour scier automatiquement en deux les fûts (A) pour permettre de déverser leur contenu dans ladite cuve de mélange (15),
- ladite cuve de mélange (15) pour ajouter audit volume prédéterminé une quantité donnée d'eau mélangée à une base en vue d'ajuster le pH à une valeur déterminée, afin de constituer une solution et/ou une suspension liquide,
- un réacteur à pression (20) et des moyens pour transvaser dans ledit réacteur à pression (20) ladite solution et/ou ladite suspension liquide,
- un dispositif pour introduire dans ledit réacteur à pression (20) une atmosphère d'oxygène et pour mettre ladite atmosphère sous une pression comprise entre 40 et 200 bars et suffisante pour maintenir l'eau sous forme liquide dans ledit réacteur à pression,
- un dispositif agitateur pour agiter ladite solution et/ou ladite suspension liquide confinée dans ledit réacteur à pression (20),
- un équipement de chauffage pour soumettre ledit réacteur à pression (20) avec son contenu à un traitement thermique à une température sensiblement comprise entre 150 et 350°C et de préférence voisine de 300°C pendant une durée déterminée pour finaliser ladite oxydation par voie humide, afin d'effectuer ledit traitement dans des conditions dites « sous-critiques », l'eau étant maintenue à l'état liquide, et
- des moyens pour évacuer lesdits déchets traités de manière sécurisée en vue de leur stockage ou de leur élimination.

2. Installation (10) selon la revendication 1, **caractérisée en ce que** la cuve de mélange (15) est équipée d'une trémie (17) sous laquelle est monté un broyeur (17a) pour concasser les déchets entrants, ladite cuve de mélange (15) étant agencée pour recevoir ladite quantité donnée d'eau pour former un mélange liquide sous forme de suspension fluide contenant lesdits déchets à traiter et concassés.

3. Installation (10) selon la revendication 1, **caractérisée en ce que** ledit équipement de chauffage (23) dudit réacteur à pression (20) comporte un réservoir à huile (24) couplé à un manteau de chauffage (25) entourant en partie le réacteur à pression (20).

4. Installation (10) selon la revendication 1, **caractérisée en ce qu'**elle comporte un évaporateur (30) connecté audit réacteur à pression (20) pour séparer les résidus solides et les résidus gazeux issus desdits déchets après leur traitement dans ledit réacteur à pression (20).

5. Installation (10) selon la revendication 1, **caractérisée en ce qu'**elle comporte un cristalliseur (32) agencé pour traiter les résidus gazeux issus desdits déchets après leur traitement dans ledit réacteur à pression (20).

6. Installation (10) selon la revendication 1, **caractérisée en ce qu'**elle comporte un mélangeur (36) de particules minérales pour combiner lesdites particules minérales audits résidus solides issus desdits déchets après leur traitement dans ledit réacteur à pression (20) pour figer les minéraux radioactifs.

7. Procédé de traitement par oxydation par voie humide de déchets organiques dangereux sous forme solide et liquide principalement, notamment radioactifs, contenant des charges minérales et des charges organiques, et optionnellement des matières bio-minérales, ces déchets étant traités de manière confinée dans un environnement sécurisé, ledit procédé utilisant l'installation (10) de l'une quelconque des revendications 1 à 7 et comprenant les étapes suivantes :
- l'on achemine sous forme confinée dans des fûts (A) hermétiquement scellés un volume desdits déchets organiques dangereux qui traversent le sas contrôlé (12a) de l'enceinte (11) sur le transporteur à bande (14) ;
- l'on achemine lesdits fûts (A) au-dessus de la cuve de mélange (15) par un palan (16),
- l'on scie automatiquement en deux les fûts (A) pour permettre de déverser leur contenu dans ladite cuve de mélange (15) ;
- l'on ajoute dans la cuve de mélange (15) audit volume prédéterminé une quantité donnée d'eau mélangée à une base en vue d'ajuster le pH à une valeur déterminée, pour constituer une solution et/ou une suspension liquide que l'on transvase dans un réacteur à pression (20) ;
- l'on pressurise le contenu dudit réacteur avec une atmosphère d'oxygène sous pression comprise entre 40 et 200 bars et suffisante pour maintenir l'eau sous forme liquide dans ledit réacteur à pression (20), tout en agitant ladite solution et/ou ladite suspension liquide confinée dans ledit réacteur (20), et l'on soumet ledit réacteur (20) avec son contenu à un traitement thermique à une température sensiblement comprise entre 150 et 350°C et de préférence voisine de 300°C, pendant une durée déterminée pour finaliser ladite oxydation par voie humide, afin d'effectuer le traitement dans des conditions dites "sous-critiques", l'eau étant maintenue à l'état liquide; et
- l'on procède ensuite à un refroidissement du contenu dudit réacteur (20);
- l'on évacue lesdits déchets traités de manière sécurisée en vue de leur concentration ou de leur élimination.

8. Procédé selon la revendication 7, **caractérisé en ce que** ladite quantité donnée d'eau mélangée à une base est ajustée de telle manière que la solution et/ou la suspension liquide contienne sensiblement entre 5 et 30% et de préférence entre 8 et 15% de matière sèche en solution et/ou en suspension.

9. Procédé selon la revendication 7, **caractérisé en ce que** le volume de la solution et/ou de la suspension liquide contenue dans ledit réacteur correspond sensiblement à un taux de remplissage compris entre 20 et 90% et de préférence entre 60 et 80% du volume intérieur dudit réacteur.

10. Procédé selon la revendication 7, **caractérisé en ce que** la pression de l'atmosphère d'oxygène dans ledit réacteur est sensiblement comprise entre 70 et 100 bars.

11. Procédé selon la revendication 7, **caractérisé en ce que** l'on maintient ladite solution et/ou suspension liquide contenue dans ledit réacteur à ladite température de traitement d'oxydation pendant une durée sensiblement comprise entre 0.2 et 4 heures.

12. Procédé selon la revendication 7, **caractérisé en ce que** l'ajout de base à ladite quantité donnée d'eau est tel que le pH de ladite solution et/ou suspension liquide soit compris entre 2 et 10.

13. Procédé selon la revendication 7, **caractérisé en ce que** le refroidissement du contenu dudit réacteur est effectué en deux phases, une première phase de refroidissement rapide, constituant une sorte de trempe et une seconde phase de refroidissement pour abaisser la température du mélange progressivement jusqu'à la température ambiante.

14. Procédé selon la revendication 13, **caractérisé en ce que** ladite première phase abaisse la température de l'ordre de 50 à 150°C et de préférence de l'ordre de 100°C.

15. Procédé selon la revendication 7, **caractérisé en ce que** l'on procède, après le refroidissement à une dépressurisation de l'installation au cours de laquelle le mélange résiduel de liquide et de gaz du réacteur est expulsé vers un évaporateur qui se trouve à pression ambiante.

16. Procédé selon la revendication 15, **caractérisé en ce que** l'on envoie les gaz produits et mélangés à la vapeur d'eau dans l'évaporateur, dans un cristalliseur pour être traités, les gaz non condensables l'atmosphère à travers un catalyseur.

17. Procédé selon l'une quelconque des revendications précédentes, **caractérisé en ce que** l'on traite les résidus solides de condensation par un mélangeur ayant pour fonction de les mélanger avec des composants minéraux neutres en vue de former des granulats solides.

## Patentansprüche

1. Anlage (10) zur Behandlung von gefährlichen organischen Abfällen in fester und hauptsächlich flüssiger, insbesondere radioaktiver Form, die mineralische und organische Füllstoffe sowie gegebenenfalls biomineralische Stoffe enthalten, durch Nassoxidation, **dadurch gekennzeichnet, dass** sie umfasst:
- einen geschlossenen und dichten Raum (11), der mit einem Einlass (12) zu behandelnde Abfälle und einem Auslass (13) behandelte Abfälle versehen ist, wobei der Einlass die Form einer gesteuerten Luftschleuse (12a) aufweist;
- Einrichtungen zum Befördern eines Volumens der gefährlichen organischen Abfälle in eingeschlossener Form in hermetisch versiegelte Fässer (A), wobei die Einrichtungen ein Förderband (14) umfassen, das den Einlass (12) durchquert, um die Abfälle auf dem Förderband (14) zu befördern;
- ein Hebezeug zum Befördern der Fässer (A) über einen Mischbehälter (15),
- Einrichtungen zum automatischen Sägen der Fässer (A) in zwei Hälften, damit deren Inhalt in den Mischbehälter (15) gegossen werden kann,
- den Mischbehälter (15) zum Zugeben einer vorbestimmten Menge von mit einer Base vermischtem Wasser zu dem vorbestimmten Volumen, um den pH-Wert auf einen vorbestimmten Wert einzustellen, um eine Lösung und/oder eine flüssige Suspension zu bilden,
- einen Druckreaktor (20) und Einrichtungen zum Umfüllen der Lösung und/oder der flüssigen Suspension in den Druckreaktor (20),
- eine Vorrichtung zum Einleiten einer Sauerstoffatmosphäre in den Druckreaktor (20) und zum Unterdrucksetzen der Atmosphäre auf einen Druck zwischen 40 und 200 bar, der ausreicht, um Wasser in flüssiger Form in dem Druckreaktor zu halten,
- eine Rührvorrichtung zum Rühren der Lösung und/oder der flüssigen Suspension, die in dem Druckreaktor (20) eingeschlossen ist,
- eine Heizvorrichtung, um den Druckreaktor (20) mit seinem Inhalt einer Wärmebehandlung bei einer Temperatur im Wesentlichen zwischen 150 und 350 °C, und vorzugsweise nahe 300 °C für eine vorbestimmte Zeitdauer zu unterziehen, um die Nassoxidation zu vollenden, um die Behandlung unter sogenannten "unterkritischen" Bedingungen durchzuführen, wobei das Wasser im flüssigen Zustand gehalten wird, und
- Einrichtungen zum sicheren Abtransportieren der behandelten Abfälle zu deren Lagerung oder deren Beseitigung.

2. Anlage (10) nach Anspruch 1, **dadurch gekennzeichnet, dass** der Mischbehälter (15) mit einem Trichter (17) ausgestattet ist, unter dem ein Zerkleinerer (17a) zum Zerkleinern der eintretenden Abfälle angebracht ist, wobei der Mischbehälter (15) so eingerichtet ist, dass er die gegebene Wassermenge aufnimmt, um eine flüssige Mischung in Form einer flüssigen Suspension zu bilden, die die zu behandelnden und zerkleinerten Abfälle enthält.

3. Anlage (10) nach Anspruch 1, **dadurch gekennzeichnet, dass** die Heizeinrichtung (23) des Druckreaktors (20) einen Öltank (24) umfasst, der mit einem Heizmantel (25) verbunden ist, der den Druckreaktor (20) teilweise umgibt.

4. Anlage (10) nach Anspruch 1, **dadurch gekennzeichnet, dass** sie einen Verdampfer (30) umfasst, der mit dem Druckreaktor (20) verbunden ist, um die festen Rückstände und die gasförmigen Rückstände von den Abfällen nach deren Behandlung in dem Druckreaktor (20) zu trennen.

5. Anlage (10) nach Anspruch 1, **dadurch gekennzeichnet, dass** sie einen Kristallisator (32) umfasst, der so eingerichtet ist, dass er die gasförmigen Rückstände der Abfälle nach deren Behandlung in dem Druckreaktor (20) behandelt.

6. Anlage (10) nach Anspruch 1, **dadurch gekennzeichnet, dass** sie einen Mischer (36) für mineralische Partikel umfasst, um die mineralischen Partikel mit den festen Rückständen der Abfälle nach deren Behandlung im Druckreaktor (20) zu verbinden, um die radioaktiven Mineralien zu fixieren.

7. Verfahren zur Behandlung von gefährlichen organischen Abfällen in fester und hauptsächlich flüssiger, insbesondere radioaktiver Form, die mineralische und organische Füllstoffe sowie gegebenenfalls biomineralische Stoffe enthalten, durch Nassoxidation, wobei die Abfälle auf eingeschlossene Art in einem gesicherten Umfeld behandelt werden, wobei bei dem Verfahren die Anlage (10) nach einem der Ansprüche 1 bis 7 verwendet wird, und es die folgenden Schritte umfasst:
- Befördern eines Volumens der gefährlichen organischen Abfälle in hermetisch versiegelten Fässern (A) in eingeschlossener Form durch die gesteuerte Luftschleuse (12a) des Gehäuses (11) auf dem Förderband (14);
- Befördern der Fässer (A) mit einem Hebezeug (16) über einen Mischbehälter (15),
- Automatisches Sägen der Fässer (A) in zwei Hälften, damit deren Inhalt in den Mischbehälter (15) gegossen werden kann;
- Zugeben einer vorbestimmten Menge von mit einer Base vermischtem Wasser zu dem vorbestimmten Volumen in den Mischbehälter (15), um den pH-Wert auf einen vorbestimmten Wert einzustellen, um eine Lösung und/oder eine flüssige Suspension zu bilden, die in den Druckreaktor (20) umgefüllt wird;
- Unterdrucksetzen des Inhalts des Reaktors mit einer Sauerstoffatmosphäre auf einen Druck zwischen 40 und 200 bar, der ausreicht, um das Wasser in flüssiger Form in dem Druckreaktor (20) zu halten, während die Lösung und/oder die flüssige Suspension, die in dem Reaktor (20) eingeschlossen ist, gerührt wird, und Unterziehen des Reaktors (20) mit seinem Inhalt einer Wärmebehandlung bei einer Temperatur im Wesentlichen zwischen 150 und 350 °C, und vorzugsweise nahe 300 °C für eine vorbestimmte Zeitdauer, um die Nassoxidation zu vollenden, um die Behandlung unter sogenannten "unterkritischen" Bedingungen durchzuführen, wobei das Wasser im flüssigen Zustand gehalten wird; und
- anschließendes Abkühlen des Inhalts des Reaktors (20);
- sicheres Abtransportieren der behandelten Abfälle zu deren Konzentration oder deren Beseitigung.

8. Verfahren nach Anspruch 7, **dadurch gekennzeichnet, dass** die gegebene Menge von mit einer Base vermischtem Wasser so eingestellt wird, dass die Lösung und/oder flüssige Suspension im Wesentlichen zwischen 5 und 30 % und vorzugsweise zwischen 8 und 15 % Trockensubstanz in Lösung und/oder Suspension enthält.

9. Verfahren nach Anspruch 7, **dadurch gekennzeichnet, dass** das Volumen der Lösung und/oder der flüssigen Suspension, die in dem Reaktor enthalten ist, im Wesentlichen einem Füllverhältnis zwischen 20 und 90 %, und vorzugsweise zwischen 60 und 80 % des Innenvolumens des Reaktors entspricht.

10. Verfahren nach Anspruch 7, **dadurch gekennzeichnet, dass** der Druck der Sauerstoffatmosphäre in dem Reaktor im Wesentlichen zwischen 70 und 100 bar liegt.

11. Verfahren nach Anspruch 7, **dadurch gekennzeichnet, dass** die in dem Reaktor enthaltene Lösung und/oder flüssige Suspension während einer Zeitdauer von im Wesentlichen zwischen 0,2 und 4 Stunden auf der Temperatur der Oxidationsbehandlung gehalten wird.

12. Verfahren nach Anspruch 7, **dadurch gekennzeichnet, dass** das Zugeben von Base zu der gegebenen Menge an Wasser derart ist, dass der pH-Wert der Lösung und/oder der flüssigen Suspension zwischen 2 und 10 liegt.

13. Verfahren nach Anspruch 7, **dadurch gekennzeichnet, dass** die Abkühlung des Inhalts des Reaktors in zwei Phasen durchgeführt wird, einer ersten schnellen Abkühlungsphase, die eine Art Abschreckung darstellt, und einer zweiten Abkühlungsphase, um die Temperatur des Gemischs allmählich bis auf Umgebungstemperatur zu senken.

14. Verfahren nach Anspruch 13, **dadurch gekennzeichnet, dass** die erste Phase die Temperatur in der Größenordnung von etwa 50 bis 150 °C, und vorzugsweise in der Größenordnung von etwa 100 °C absenkt.

15. Verfahren nach Anspruch 7, **dadurch gekennzeichnet, dass** die Anlage nach dem Abkühlen drucklos gemacht wird, wobei das im Reaktor befindliche Restgemisch aus Flüssigkeit und Gas aus dem Reaktor in einen Verdampfer ausgestoßen wird, der sich auf Umgebungsdruck befindet.

16. Verfahren nach Anspruch 15, **dadurch gekennzeichnet, dass** die erzeugten und mit dem Wasserdampf vermischten Gase dem Verdampfer in einem Kristallisator zur Behandlung zugeführt werden, wobei die nicht kondensierbaren Gase über einen Katalysator in die Atmosphäre abgeführt werden.

17. Verfahren nach einem der vorstehenden Ansprüche, **dadurch gekennzeichnet, dass** die festen Kondensationsrückstände mit einem Mischer behandelt werden, der die Funktion aufweist, sie mit neutralen mineralischen Komponenten zu mischen, um feste Mineralmasse zu bilden.

## Claims

1. Plant (10) for the treatment, by wet oxidation, of dangerous organic waste mainly in the solid and liquid form, in particular radioactive waste, containing inorganic loads and organic loads, and optionally bioorganic substances, **characterized in that** it comprises:
- a closed and leaktight chamber (11) provided with an inlet (12) for the waste to be treated and with an outlet (13) for the treated waste; the said inlet being produced in the form of a controlled air lock (12a);
- means for transporting, in a form confined in hermetically sealed drums (A), a volume of the said dangerous organic waste, the said means comprising a conveyor belt (14) which passes through the said inlet (12), in order to transport the said waste on the conveyor belt (14) ;
- a hoist for transporting the said drums (A) above a mixing vessel (15),
- means for automatically sawing the drums (A) in two in order to make it possible to pour their contents into the said mixing vessel (15),
- the said mixing vessel (15), in order to add, to the said predetermined volume, a given amount of water mixed with a base for the purpose of adjusting the pH to a predetermined value, in order to form a solution and/or a liquid suspension,
- a pressure reactor (20) and means for decanting, into the said pressure reactor (20), the said solution and/or the said liquid suspension,
- a device for introducing, into the said pressure reactor (20), an oxygen atmosphere and for placing the said atmosphere under a pressure of between 40 and 200 bar sufficient to maintain the water in the liquid form in the said pressure reactor,
- a stirring device for stirring the said solution and/or the said liquid suspension confined in the said pressure reactor (20),
- a heating installation for subjecting the said pressure reactor (20) with its contents to a heat treatment at a temperature substantially of between 150 and 350°C and preferably in the vicinity of 300°C for a predetermined period of time to finalize the said wet oxidation, in order to carry out the said treatment under "subcritical" conditions, the water being maintained in the liquid state, and
- means for discharging the said treated waste in a safe manner for the purpose of its storage or of its removal.

2. Plant (10) according to Claim 1, **characterized in that** the mixing vessel (15) is equipped with a hopper (17) under which is fitted a grinder (17a) for crushing the incoming waste, the said mixing vessel (15) being arranged in order to receive the said given amount of water in order to form a liquid mixture in the form of a fluid suspension containing the said waste to be treated and crushed.

3. Plant (10) according to Claim 1, **characterized in that** the said heating installation (23) for the said pressure reactor (20) comprises an oil tank (24) coupled to a heating mantle (25) partially surrounding the pressure reactor (20).

4. Plant (10) according to Claim 1, **characterized in that** it comprises an evaporator (30) connected to the said pressure reactor (20) in order to separate the solid residues and the gaseous residues resulting from the said waste after its treatment in the said pressure reactor (20).

5. Plant (10) according to Claim 1, **characterized in that** it comprises a crystallizer (32) arranged in order to treat the gaseous residues resulting from the said waste after its treatment in the said pressure reactor (20).

6. Plant (10) according to Claim 1, **characterized in that** it comprises a mixer (36) for inorganic particles in order to combine the said inorganic particles with the said solid residues resulting from the said waste after its treatment in the said pressure reactor (20) in order to solidify the reactive inorganic products.

7. Process for the treatment, by wet oxidation, of dangerous organic waste mainly in the solid and liquid form, in particular radioactive waste, containing inorganic loads and organic loads, and optionally bioorganic substances, this waste being treated in a confined way in a safe environment, the said process using the plant (10) of any one of Claims 1 to 7 and comprising the following stages:
- a volume of the said dangerous organic waste, which passes through the controlled air lock (12a) of the chamber (11) on the conveyor belt (14), is transported in a form confined in hermetically sealed drums (A);
- the said drums (A) are transported above the mixing vessel (15) by a hoist (16),
- the drums (A) are automatically sawn in two in order to make it possible to pour their contents into the said mixing vessel (15);
- the addition is carried out, in the mixing vessel (15), to the said predetermined volume, of a given amount of water mixed with a base for the purpose of adjusting the pH to a predetermined value, in order to form a solution and/or a liquid suspension which is decanted into a pressure reactor (20);
- the contents of the said reactor are pressurized with an oxygen atmosphere under a pressure of between 40 and 200 bar sufficient to maintain the water in the liquid form in the said pressure reactor (20), while stirring the said solution and/or the said liquid suspension confined in the said reactor (20), and the said reactor (20) with its contents are subjected to a heat treatment at a temperature substantially of between 150 and 350°C and preferably in the vicinity of 300°C, for a predetermined period of time to finalize the said wet oxidation, in order to carry out the treatment under "subcritical" conditions, the water being maintained in the liquid state; and
- the contents of the said reactor (20) are subsequently cooled;
- the said treated waste is discharged in a safe manner for the purpose of its concentration and of its removal.

8. Process according to Claim 7, **characterized in that** the said given amount of water mixed with a base is adjusted so that the solution and/or the liquid suspension contains substantially between 5% and 30% and preferably between 8% and 15% of dry matter in solution and/or in suspension.

9. Process according to Claim 7, **characterized in that** the volume of the solution and/or of the liquid suspension present in the said reactor corresponds substantially to a degree of filling of between 20% and 90% and preferably between 60% and 80% of the internal volume of the said reactor.

10. Process according to Claim 7, **characterized in that** the pressure of the oxygen atmosphere in the said reactor is substantially of between 70 and 100 bar.

11. Process according to Claim 7, **characterized in that** the said solution and/or liquid suspension present in the said reactor is maintained at the said oxidation treatment temperature for a period of time substantially of between 0.2 and 4 hours.

12. Process according to Claim 7, **characterized in that** the addition of base to the said given amount of water is such that the pH of the said solution and/or liquid suspension is between 2 and 10.

13. Process according to Claim 7, **characterized in that** the cooling of the contents of the said reactor is carried out in two phases, a first phase of rapid cooling, constituting a type of quenching, and a second phase of cooling in order to gradually lower the temperature of the mixture down to ambient temperature.

14. Process according to Claim 13, **characterized in that** the said first phase lowers the temperature by the order of 50 to 150°C and preferably by the order of 100°C.

15. Process according to Claim 7, **characterized in that**, after the cooling, a depressurization of the plant is carried out during which the residual mixture of liquid and of gas from the reactor is expelled to an evaporator which is at ambient pressure.

16. Process according to Claim 15, **characterized in that** the gases produced and mixed with steam in the evaporator are sent into a crystallizer in order to be treated, the noncondensable gases being discharged to the atmosphere through a catalyst.

17. Process according to any one of the preceding claims, **characterized in that** the solid condensation residues are treated by a mixer having the role of mixing them with neutral inorganic components for the purpose of forming solid aggregates.
